# EUROPEAN PATENT APPLICATION

(11) **EP 4 134 704 A1**
(43) Date of publication of application: **15.02.2023**
(21) Application number: 21784512.2
(22) Date of filing: 19.01.2021
(51) Int. Cl.: G01S 13/34, G01S 7/02, G01S 7/35, G01S 13/931

(54) **RADAR DEVICE**

(30) Priority: 10.04.2020 JP 2020071291
(71) Applicant: MITSUBISHI ELECTRIC CORPORATION, Chiyoda-ku Tokyo 100-8310 (JP)
(72) Inventor: KAMIMURA, Tatsuya, Tokyo 100-8310 (JP)
(74) Representative: Hoffmann Eitle
(86) International application number: PCT/JP2021/001708
(87) International publication number: WO 2021/205705

(57) **Abstract**

A radar device (100) includes an antenna unit (16) that emits a radar wave into space, a high frequency circuit (17) that receives a reflected wave of the radar wave from a target via the antenna unit (16), and a baseband circuit (18) that converts a received signal outputted from the high frequency circuit (17) into a baseband signal having a digital value. The radar device (100) has a first mode for detecting the target at a relatively long distance and a second mode for detecting the target at a relatively short distance. Four or more receiving channels are configured in the antenna unit (16), the high frequency circuit (17), and the baseband circuit (18), a receiving channel number that is the number of the receiving channels on which the conversion processing to the baseband signal is performed is smaller in the second mode than in the first mode, and the speed of the conversion processing is faster in the second mode than in the first mode.

## Description

### Field

The present disclosure relates to a radar device that performs detection of a target.

### Background

Patent Literature 1 listed below discloses a frequency modulation technique applicable to a fast chirp modulation (FCM) radar. The FCM radar has characteristics of facilitation of fabrication, a relatively low frequency band of a transmitted and received beat signals subject to baseband processing, and thus easy handling thereof. Due to such characteristics, the FCM radar has been widely used as an automobile anti-collision millimeter wave radar, and has been expected to be used as prospective one of sensors for automatic driving in the future.

### Citation List

### Patent Literature

Patent Literature 1: Japanese Patent No. 6351910

### Summary

### Technical Problem

However, the FCM radar described in Patent Literature 1 listed above has a configuration in which an analog to digital converter (ADC) is connected for each receiving channel. Therefore, as the number of receiving channels of the FCM radar increases, the number of ADCs also increases, and there is a problem that the size, manufacturing cost, and power consumption of the FCM radar increase.

The present disclosure has been made in view of the above circumstances, and an object thereof is to provide a radar device capable of preventing an increase in size, manufacturing cost, and power consumption thereof even when the number of receiving channels increases.

### Solution to Problem

In order to solve the above problem and achieve the object, the present disclosure provides a radar device comprising: an antenna unit to emit a radar wave into space; a high frequency circuit to receive a reflected wave of the radar wave from a target via the antenna unit; and a baseband circuit to convert a received signal outputted from the high frequency circuit into a baseband signal having a digital value, wherein the radar device has a first mode set to detect the target at a relatively long distance and a second mode set to detect the target at a relatively short distance, four or more receiving channels are configured in the antenna unit, the high frequency circuit, and the baseband circuit, a receiving channel number that is the number of the receiving channels on which conversion processing to the baseband signal is performed is smaller in the second mode than in the first mode, and a speed of the conversion processing is higher in the second mode than in the first mode.

### Advantageous Effects of Invention

The radar device according to the present disclosure has an advantageous effect that it can prevent an increase in size, manufacturing cost, and power consumption thereof even when the number of receiving channels increases.

### Brief Description of Drawings

FIG. 1 is a block diagram illustrating an example of a configuration of a radar device according to an embodiment.
FIG. 2 is a block diagram illustrating an example of a hardware configuration that implements a function of a micro control unit (MCU) in the embodiment.
FIG. 3 is a first diagram used for explaining operations in a short range mode and a long range mode of the embodiment.
FIG. 4 is a second diagram used for explaining the operations in the short range mode and the long range mode of the embodiment.
FIG. 5 is a third diagram used for explaining the operations in the short range mode and the long range mode of the embodiment.
FIG. 6 is a time chart illustrating sampling timings of an ADC in the short range mode and the long range mode of the embodiment.
FIG. 7 is a diagram illustrating a data flow in the short range mode and the long range mode of the embodiment.

### Description of Embodiment

Hereinafter, a radar device according to an embodiment of the present disclosure will be described in detail with reference to the accompanying drawings. Note that in the following embodiment, an FCM radar will be described as an example, the intent of which is not to exclude application to radar devices other than the FCM radar. Also, in the following description, electrical connection and physical connection are not particularly distinguished from each other and simply referred to as "connection".

### Embodiment.

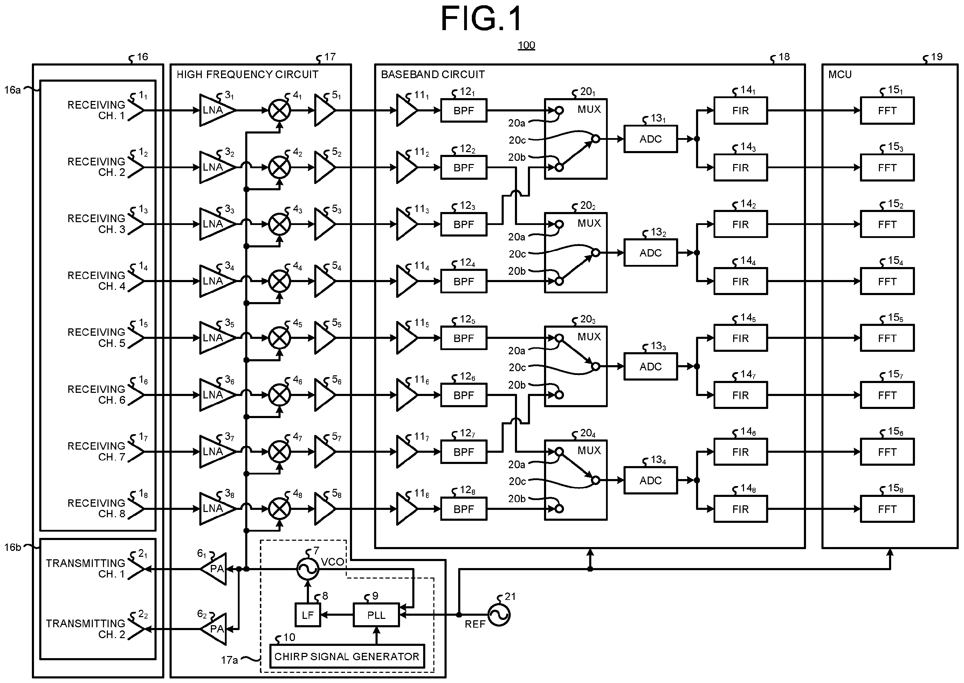

FIG. 1 is a block diagram illustrating an example of a configuration of a radar device 100 according to an embodiment. As illustrated in FIG. 1, the radar device 100 according to the embodiment includes an antenna unit 16, a reference signal source 21 configured to generate a reference signal REF (REFerence signal), a high frequency circuit 17, a baseband circuit 18, and an MCU 19. The high frequency circuit 17, the baseband circuit 18, and the reference signal source 21 constitute a "transceiver unit", and the MCU 19 constitutes a "signal processing unit".

The antenna unit 16 includes a receiving array 16a and a transmitting array 16b. The receiving array 16a includes receiving antennas 1₁ to 1₈. The transmitting array 16b includes transmitting antennas 2₁ and 2₂. In a case where the radar device 100 is used as an automobile anti-collision millimeter wave radar, the receiving antennas 1₁ to 1₈ and the transmitting antennas 2₁ and 2₂ are arranged in a horizontal direction and in a direction orthogonal to a traveling direction of an automobile. Note that, hereinafter, the receiving antennas 1₁ to 1₈ may be referred to as "first receiving antenna" to "eighth receiving antenna", respectively.

The subscript in the reference numeral of each of the receiving antennas 1₁ to 1₈ and the transmitting antennas 2₁ and 2₂ is attached for identification of a channel (ch). Note that, in the following description, the receiving antennas 1₁ to 1₈ will be denoted as a "receiving antenna 1" without the subscript when not individually distinguished from one another, and the transmitting antennas 2₁ and 2₂ will be denoted as a "transmitting antenna 2" without the subscript when not individually distinguished from each other. This notation is also applied to other components described below that are identified by attached subscripts.

Moreover, the channel is a collective processing unit involved in component elements of the transceiver unit and the signal processing unit, performed by one receiving antenna 1 or one transmitting antenna 2. Hereinafter, the channel of the receiving antenna 1 will be referred to as a "receiving channel", and the channel of the transmitting antenna 2 will be referred to as a "transmitting channel". In FIG. 1, a receiving channel number that is the number of receiving channels is eight, and a transmitting channel number that is the number of transmitting channels is two. Hereinafter, the receiving channel connected to the receiving antenna 1₁ will be denoted as a "receiving ch. 1". The receiving channels connected to the receiving antennas 1₂ to 1₈ and the transmitting channels connected to the transmitting antennas 2₂ and 2₈ will be similarly denoted. Note that the number of channels illustrated in FIG. 1 in each respect is categorized in examples, and the present disclosure is not necessarily limited to these examples.

The high frequency circuit 17 includes a voltage controlled oscillator (VCO) 7, a loop filter (LF) 8, a phase locked loop (PLL) 9, and a chirp signal generator 10 that is a device configured to generate a chirp signal. Hereinafter, the "voltage controlled oscillator" will be referred to as a "VCO", the "loop filter" will be referred to as an "LF", and the "phase locked loop" will be referred to as a "PLL". The VCO 7, the LF 8, the PLL 9, and the chirp signal generator 10 constitute a local unit 17a.

The high frequency circuit 17 also includes power amplifiers (PAs) 6₁ and 6₂, low noise amplifiers (LNAs) 3₁ to 3₈, mixers (MIXs) 4₁ to 4₈, and intermediate frequency amplifiers (IFAs) 5₁ to 5₈. Hereinafter, the "power amplifier" will be referred to as a "PA", the "low noise amplifier" will be referred to as an "LNA", the "mixer" will be referred to as an "MIX", and the "intermediate frequency amplifier" will be referred to as an "IFA".

The baseband circuit 18 includes base band amplifiers (BBAs) 11₁ to 11₈, band pass filters (BPFs) 12₁ to 12₈, multiplexers (MUXs) 20₁ to 20₄, ADCs 13₁ to 13₄, and finite impluse response filters (FIRs) 14₁ to 14₈. The FIR filter is an example of a digital filter. Hereinafter, the "base band amplifier" will be referred to as a "BBA", the "bandpass filter" will be referred to as a "BPF", and the "multiplexer" will be referred to as an "MUX". The "FIR filter" will be abbreviated as "FIR". Also, hereinafter, the MUXs 20₁ to 20₄ may be referred to as "first multiplexer" to "fourth multiplexer", respectively.

The MCU 19 includes fast Fourier transform (FFT) processing units 15₁ to 15₈ configured to perform fast Fourier transform as Fourier transform processing. Hereinafter, the "FFT processing unit" will be abbreviated as an "FFT".

Next, a basic operation of the radar device 100 will be described.

The PLL 9 receives, as its inputs, the reference signal REF and the chirp signal generated by the chirp signal generator 10. The PLL 9 performs frequency modulation of the reference signal REF with a modulation pattern based on the chirp signal. The signal that has been frequency-modulated by the PLL 9 is band-limited by the LF 8 and inputted to the VCO 7. The VCO 7 cooperates with the PLL 9 to output a high frequency signal that has been frequency-modulated. The high frequency signal outputted from the VCO 7 includes a sawtooth wave up-chirp signal or a sawtooth wave down-chirp signal. The up-chirp signal is a signal whose frequency increases with a lapse of time. The down-chirp signal is a signal whose frequency decreases with a lapse of time.

The PA 6 amplifies the high frequency signal to have a desired electric power, and outputs the amplified high frequency signal to the transmitting antenna 2. The transmitting antenna 2 converts the high frequency signal into a radar wave that is a radio wave, and emits the radar wave obtained by the conversion into space.

The high frequency circuit 17 has a function of receiving a reflected wave of the transmitted radar wave from a target via the receiving array 16a of the antenna unit 16, and transmitting the received signal to the baseband circuit 18 situated in the subsequent stage.

In order to implement the above-mentioned function, the LNA 3 amplifies the received signal. The MIX 4 down-converts the signal outputted from the LNA 3 using a local signal outputted from the local unit 17a. The IFA 5 amplifies the down-converted signal to have a desired signal strength. Note that in the FCM radar, the local signal is linearly modulated. As a result, the signal outputted from the MIX 4 is generally a sine wave signal. Hereinafter, the signal outputted from the high frequency circuit 17 will be referred to as a "received signal".

The baseband circuit 18 has a function of converting the received signal outputted from the high frequency circuit 17 into a baseband signal having a digital value.

In order to implement the above-mentioned function, the BBA 11 amplifies the received signal outputted from the high frequency circuit 17. The BPF 12 limits a band of the signal amplified by the BBA 11. The signal band-limited by the BPF 12 is transmitted to the ADC 13 via the MUX 20. Details of the configuration and operation of the MUX 20 will be described later.

The ADC 13 converts the analog signal outputted from the MUX 20 into a digital value. The FIR 14 performs band limitation and decimation processing on the signal having a digital value obtained by conversion of the ADC 13. The baseband signal having a digital value on which the band limitation and the decimation processing have been performed is transmitted to the MCU 19.

The MCU 19 performs arithmetic processing for obtaining radar information such as a distance to the target, a relative speed of the target, and an azimuth of the target, with use of the baseband signal outputted from the baseband circuit 18. This arithmetic processing is performed by the FFT 15.

Next, operation modes of the radar device 100 according to the embodiment will be described. The radar device 100 according to the embodiment has a long range mode and a short range mode. The long range mode is a mode for detecting a target situated at a relatively long distance. The short range mode is a mode for detecting a target situated at a relatively short distance. Note that hereinafter, the long range mode may be referred to as a "first mode", and the short range mode may be referred to as a "second mode" case by case. Also, target detection processing in the first mode may be referred to as "first detection processing", and target detection processing in the second mode may be referred to as "second detection processing". Note that, although details will be described later, the ADC 13 operates at a relatively low speed in the long range mode and operates at a relatively high speed in the short range mode.

Next, the configuration, connection, and function of the MUX 20 will be described. FIG. 1 illustrates the four MUXs 20₁ to 20₄. That is, the number of the MUXs 20 is half the number of receiving channels. On the other hand, the LNAs 3, the MIXs 4, the IFAs 5, the BBAs 11, the BPFs 12, the FIRs 14, and the FFTs 15 are provided in one-to-one correspondence with the receiving antennas 1 of the receiving array 16a in respect of layout. That is, the number of each of the LNAs 3, the MIXs 4, the IFAs 5, the BBAs 11, the BPFs 12, the FIRs 14, and the FFTs 15 is equal to the number of receiving channels.

Each MUX 20 includes two input terminals 20a and 20b and one output terminal 20c. In FIG. 1, the input terminals 20a and 20b of the MUXs 20 is in one-to-one correspondence with the receiving antennas 1 of the receiving array 16a in respect of layout.

In the baseband circuit 18, the input terminal 20a of the MUX 20₁ is connected to an output terminal of the BPF 12₁, and the input terminal 20b of the MUX 20₁ is connected to an output terminal of the BPF 12₃. The input terminal 20a of the MUX 20₂ is connected to an output terminal of the BPF 12₂, and the input terminal 20b of the MUX 20₂ is connected to an output terminal of the BPF 12₄. The input terminal 20a of the MUX 20₃ is connected to an output terminal of the BPF 12₅, and the input terminal 20b of the MUX 20₃ is connected to an output terminal of the BPF 12₇. The input terminal 20a of the MUX 20₄ is connected to an output terminal of the BPF 12₆, and the input terminal 20b of the MUX 20₄ is connected to an output terminal of the BPF 12₈. That is, signals outputted from the BPF 12₃ and the BPF 12₂ are crossly inputted to the input terminal 20b of the MUX 20₁ and the input terminal 20a of the MUX 20₂, respectively in contradiction to component elements in respect of their layout. Likewise, signals outputted from the BPF 12₇ and the BPF 12₆ are crossly inputted to the input terminal 20b of the MUX 20₃ and the input terminal 20a of the MUX 20₄, respectively in contradiction to component elements in respect of their layout.

The MUX 20 has a function of sequentially switching and multiplexing two signals having passed through the BPFs 12 and outputting a signal obtained by the multiplexing to the ADC 13. As a result, by the switching operation of the MUXs 20, one of the input terminals 20a and 20b of each of the MUXs 20 receives, as its input, an output signal from any one of the receiving antennas adjacent to the receiving antenna in one-to-one correspondence with the receiving antennas 1₁ to 1₈ in respect of layout. Therefore, the number of the ADCs 13 need only be equal to that of the MUXs 20 and thus half the number of receiving channels. Note that hereinafter, the input terminal 20a may be referred to as a "first input terminal", and the input terminal 20b may be referred to as a "second input terminal" case by case.

Note that the number of receiving channels is eight in FIG. 1, but the number of receiving channels may be four. Moreover, in order to maximize an advantageous effect of the present embodiment, it is ideal that the number of receiving channels is a number obtained by multiplying a natural number by four, but need not be such a natural number multiple of four. For example, the number of receiving channels may be six. In a case where the number of receiving channels is six, the BPF 12 and the ADC 13 belonging to two receiving channels can be connected without using the MUX 20. Even with such a configuration, four receiving channels can yield an advantageous effect of the present embodiment.

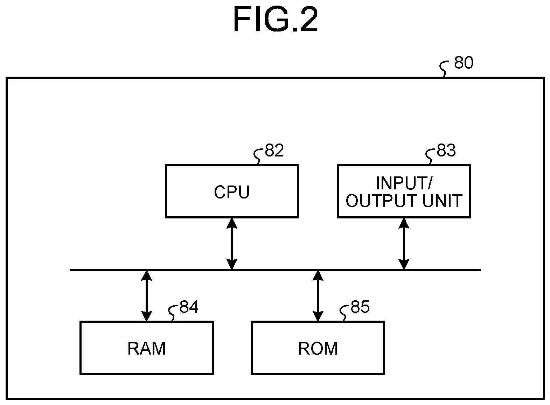

FIG. 2 is a block diagram illustrating an example of a hardware configuration that implements the function of the MCU 19 of the embodiment. In a case where the function of the FFT 15 in the MCU 19 is implemented, as illustrated in FIG. 2, a computer 80 can be used which includes a central processing unit (CPU) 82 configured to perform arithmetic processing, an input/output unit 83 that is an input/output interface with an external device, a random access memory (RAM) 84 including a program storage area and a data storage area, and a read only memory (ROM) 85 that is a non-volatile memory. The CPU 82 may be arithmetic means such as a microprocessor, a microcomputer, a processor, or a digital signal processor (DSP).

In the ROM 85, there are stored programs for various processings and databases referred to in the various processings. The programs and the databases may be recorded in a readable and writable recording medium other than the ROM 85. The recording medium may be any of a hard disk device, a portable recording medium including a CD-ROM, a DVD disk, and a USB memory, or a flash memory that is a semiconductor memory.

The programs are loaded to the RAM 84. The CPU 82 expands the programs in the program storage area in the RAM 84 and executes various processings by sending and receiving necessary information via the input/output unit 83. The data storage area in the RAM 84 serves as a work area used in execution of the various processings. The function of the MCU 19 described above and the function of the MCU 19 described later are implemented using the CPU 82.

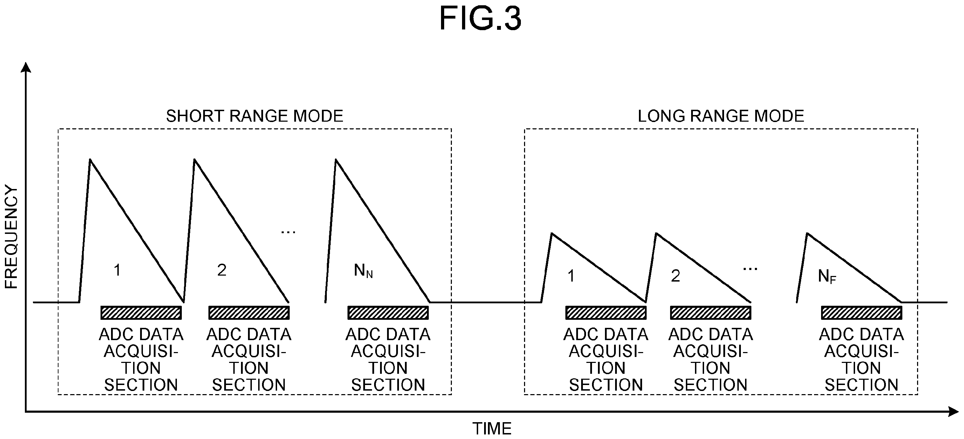

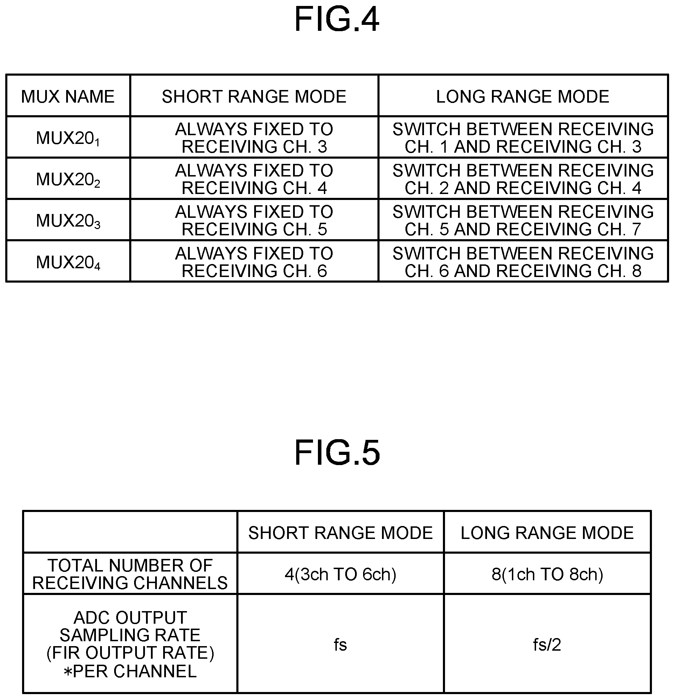

Next, the operations in the short range mode and the long range mode of the embodiment will be described with reference to FIGS. 3 to 5. FIG. 3 is a first diagram used for explaining the operations in the short range mode and the long range mode of the embodiment. FIG. 4 is a second diagram used for explaining the operations in the short range mode and the long range mode of the embodiment. FIG. 5 is a third diagram used for explaining the operations in the short range mode and the long range mode of the embodiment.

As described above, the radar device 100 illustrated in FIG. 1 have the receiving channels for eight channels in total. In the short range mode, for the purpose of spreading a horizontal beam at a wide angle and increasing resolution in a distance direction, not all the receiving ch. 1 to ch. 8 are used, but only the receiving ch. 3 to ch. 6 are used. On the other hand, in the long range mode, all the receiving ch. 1 to ch. 8 are used in order to narrow the horizontal beam. In the long range mode, since the resolution in the distance direction as high as in the short range mode is not required, the resolution in the distance direction is allowed to be lower than that in the short range mode.

According to the above embodiment, the number of the receiving antennas that contribute to the first detection processing in the long range mode is larger than the number of the receiving antennas that contribute to the second detection processing in the short range mode. In addition, all the receiving antennas 1 belonging to the receiving array 16a contribute to the first detection processing, whereas some of the receiving antennas 1 belonging to the receiving array 16a contribute to the second detection processing. Moreover, the receiving antennas 1 that contribute to the second detection processing are adjacent to each other in the receiving array 16a.

FIG. 3 illustrates modulated signals used in the short range mode and the long range mode. The modulated signal is a local signal generated by the local unit 17a. Specifically, the left side of FIG. 3 illustrates "N_{N}" sawtooth wave modulated signals used in the short range mode. The right side of FIG. 3 illustrates "N_{F}" sawtooth wave modulated signals used in the long range mode. These modulated signals are emitted into space via the transmitting antennas 2.

As illustrated in FIG. 3, the modulated signal used in the short range mode has a larger frequency shift per unit time than the modulated signal used in the long range mode. The number of sawtooth waves used in the short range mode and the long range mode, that is, the values of "N_{N}" and "N_{F}", respectively, are arbitrary. That is, the values may satisfy N_{N}=N_{F} or N_{N}≠N_{F}.

Moreover, in FIG. 3, a period represented by a hatched part is an acquisition section of ADC data. The acquisition section is a period of operation of the ADC 13 in one cycle of the modulated signal. The ADC data refers to a digital value obtained by conversion of the ADC 13. As described above, in the short range mode, the resolution in the distance direction needs to be higher than that in the long range mode. For this reason, in the short range mode, a wider reception bandwidth is required, and sampling processing is performed such that a sampling rate twice that in the long range mode can be realized.

FIG. 4 illustrates the operation of the MUX 20 in the short range mode and the long range mode in a tabular form. When the radar device 100 operates in the short range mode, an input signal to the MUX 20₁ is always fixed on the receiving ch. 3, an input signal to the MUX 20₂ is always fixed on the receiving ch. 4, an input signal to the MUX 20₃ is always fixed on the receiving ch. 5, and an input signal to the MUX 20₁ is always fixed on the receiving ch. 6. Therefore, the input terminals 20a of the MUXs 20₁ and 20₂ are open terminals, and the input terminals 20b of the MUXs 20₃ and 20₄ are open terminals. The open terminal may be rephrased as a through terminal. FIG. 1 illustrates these connection states. Since the output of the BPF 12₃ belonging to the receiving ch. 3 is inputted to the MUX 20₁ through the input terminal 20b, the output of the ADC 13₁ is inputted to the FIR 14₃ belonging to the same receiving ch. 3. Similarly, the output of the ADC 13₂ is inputted to the FIR 14₄ belonging to the receiving ch. 4, the output of the ADC 13₃ is inputted to the FIR 14₅ belonging to the receiving ch. 5, and the output of the ADC 13₄ is inputted to the FIR 14₆ belonging to the receiving ch. 6.

When the radar device 100 operates in the long range mode, the MUX 20₁ switches between the receiving ch. 1 and the receiving ch. 3. Similarly, the MUX 20₂ switches between the receiving ch. 2 and the receiving ch. 4, the MUX 20₃ switches between the receiving ch. 5 and the receiving ch. 7, and the MUX 20₄ switches between the receiving ch. 6 and the receiving ch. 8. In each MUX 20, switching between the two receiving channels is performed at the same speed as a sampling frequency of the ADC 13. That is, in the MUX 20, the terminal through which a signal input is passed is alternately switched in a sampling period that is a reciprocal of the sampling frequency.

FIG. 5 is a summary of the above operations. FIG. 5 illustrates the total number of receiving channels and the sampling rate of the ADC output in each of the short range mode and the long range mode. In FIG. 5, "fs" represents the sampling frequency. The sampling rate of the ADC output can be rephrased as an FIR output rate per channel. The total number of receiving channels is as described above, and in the long range mode, the total number of receiving channels is twice that in the short range mode. On the other hand, the sampling rate of the ADC output in the short range mode is twice that in the long range mode.

The ADC 13 always performs sampling at the same sampling frequency "fs" regardless of whether the operation is in the short range mode or the long range mode. Here, in the short range mode, data sampled by the ADC 13 is transferred to the FIR 14 corresponding to the channel number of the channel on which the data is acquired. In the case of data on the receiving ch. 3, the data acquired by the ADC 13₁ is transferred to the FIR 14₃. The same manner applies to the other receiving channels.

In the long range mode, the signal input to the MUX 20 is switched with a sampling period, and received data is multiplexed by the MUX 20 and then sampled by the ADC 13. The data sampled by the ADC 13 is distributed to the FIR 14 corresponding to the channel number. In the case of data on the receiving ch. 1 and the receiving ch. 3, the data is acquired by the ADC 13₁ and then distributed to the FIR 14₁ and the FIR 14₃.

Conventionally, the ADC has been provided for each receiving channel because design has not been made in consideration of natures of the short range mode and the long range mode. On the other hand, in the present embodiment, design is made in consideration of differences between the short range mode and the long range mode. Therefore, as illustrated in FIG. 1, the number of the ADCs can be reduced to one-half. As a result, even when the number of receiving channels increases, it is possible to prevent an increase in size, manufacturing cost, and power consumption of the radar device.

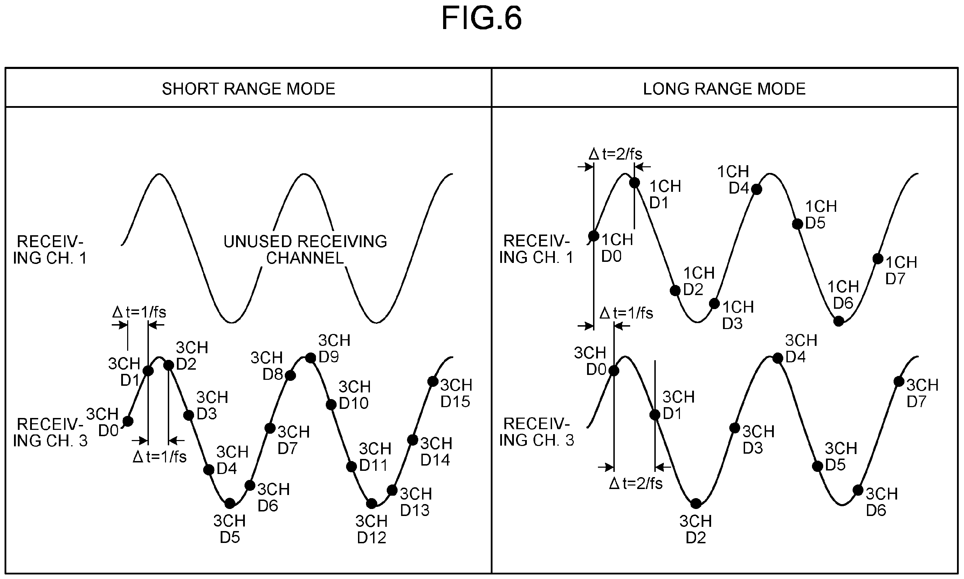

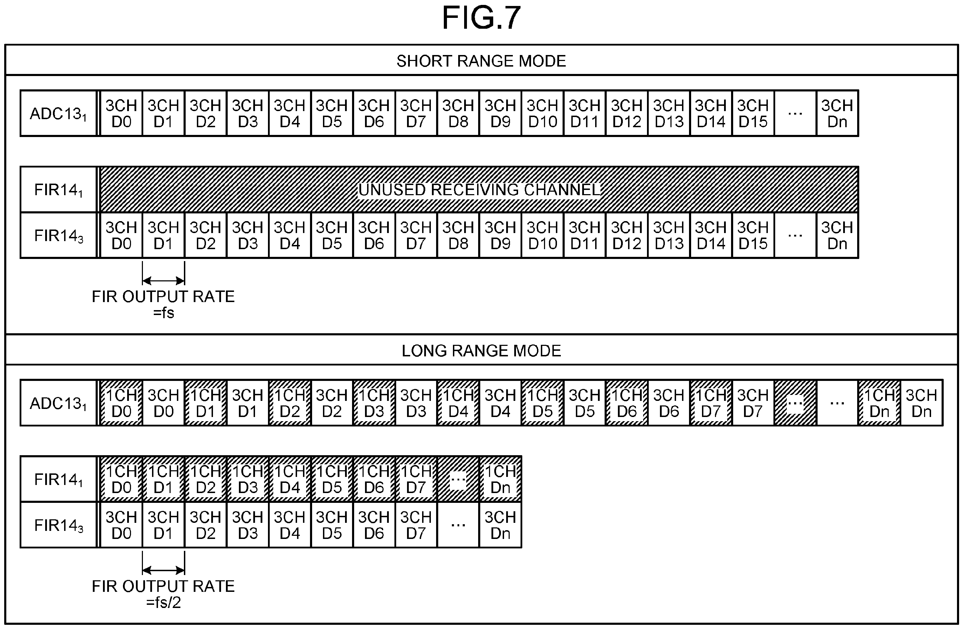

Next, implementation ideas of the radar device 100 according to the embodiment will be described with reference to FIGS. 6 and 7. FIG. 6 is a time chart illustrating sampling timings of the ADC 13 in the short range mode and the long range mode of the embodiment. FIG. 7 is a diagram illustrating a data flow in the short range mode and the long range mode of the embodiment.

FIGS. 6 and 7 illustrate data in the receiving ch. 1 and the receiving ch. 3 as an example. Specifically, the left side of FIG. 6 illustrates a waveform of a received signal in the short range mode, and the right side of FIG. 6 illustrates a waveform of a received signal in the long range mode. Moreover, the upper part of FIG. 7 illustrates the data flow in the short range mode, and the lower part of FIG. 7 illustrates the data flow in the long range mode. In FIG. 6, "Δt" represents a data output interval in each receiving channel.

As described above, in the long range mode, the through terminal of the MUX 20 is alternately switched with a sampling period of the ADC 13. On the other hand, in the short range mode, the signal input is fixed to one receiving channel. Therefore, as illustrated in FIG. 6, the short range mode has Δt=1/fs. Moreover, the long range mode has Δt=1/fs between the receiving channels, but Δt=2/fs when one receiving channel is considered. Therefore, the FIR output rate per channel in the long range mode is one-half of that in the short range mode. Also, as illustrated in FIG. 7, the FIR output rate per channel in the short range mode is "fs", and the FIR output rate per channel in the long range mode is "fs/2".

Furthermore, due to the switching operation of the MUX 20, in the long range mode, the data acquisition timing of the ADC 13 is shifted by a sampling period between the multiplexed receiving channels as shown by the waveforms on the right side of FIG. 6. In the ADC 13, the timing shift by a sampling period becomes some phase error of the received signal between the multiplexed receiving channels. As a result, target detection accuracy of the radar device 100 is affected accordingly. In a case where the receiving antenna 1 is placed on the array in the horizontal direction, accuracy of angle measurement with respect to the target in the horizontal direction may be deteriorated. Therefore, a desirable embodiment is to correct the timing shift by a sampling period. Hereinafter, two examples of timing shift correction processing will be described separately in (1) and (2). The timing shift by a sampling period is corrected by adapting any of the correction processings of (1) and (2).

### (1) MCU Correction during Radar Signal Processing

Arithmetic processing for obtaining radar information such as a distance to a target, a relative speed of the target, and an azimuth of the target is performed by the FFT 15. Here, in the long range mode, as described above, the switching operation of the MUX 20 causes the timing shift by a sampling period between the FFT 15₁ and the FFT 15₃. Such a timing shift similarly occurs between the FFT 15₂ and the FFT 15₄, between the FFT 15₅ and the FFT 15₇, and between the FFT 15₆ and the FFT 15₈. Here, a phase difference due to this timing shift is referred to as a "reception phase difference" and is represented by "Δθ_{fs}". The FFT 15 performs correction processing of canceling the reception phase difference Δθ_{fs} caused between the multiplexed receiving channels in a back calculation manner. This correction processing can be performed on an outcome of the FFT processing. Note that, in the short range mode, the switching operation of the MUX 20 is not performed, so that the correction of the reception phase difference Δθ_{fs} is unnecessary.

### (2) FIR Correction after Acquisition of ADC Data

As described above, in the long range mode, the reception phase difference Δθ_{fs} due to the switching operation of the MUX 20 occurs. Such a reception phase difference Δθ_{fs} also occurs between the FIR 14₁ and the FIR 14₃, between the FIR 14₂ and the FIR 14₄, between the FIR 14₅ and the FIR 14₇, and between the FIR 14₆ and the FIR 14₈. The FIR 14 has a property that the signal phase is shifted by half a period of the FIR output rate when compared between a case where the number of taps is an odd number and a case where the number of taps is an even number. Therefore, in the long range mode, if the number of taps is individually set to an odd number and an even number between the multiplexed receiving channels, then the reception phase difference Δθ_{fs} can be canceled. Specifically, the number of taps is individually set to an odd number and an even number between the FIR 14₁ and the FIR 14₃. Note that it goes without saying that a difference between the odd number and the even number in this example is one. The same applies to the relationship between the FIR 14₂ and the FIR 14₄, between the FIR 14₅ and the FIR 14₇, and between the FIR 14₆ and the FIR 14₈. Note that in the short range mode, all the FIRs 14 are communized to have one and the same number in the number of taps thereof. With this setting, correction of the reception phase difference Δθ_{fs} is not carried out.

As described above, the radar device according to the embodiment has the first mode for detecting a target at a relatively long distance and the second mode for detecting a target at a relatively short distance. The receiving channels, the number of which is a number obtained by multiplying a natural number by four, are configured in the antenna unit, the high frequency circuit, and the baseband circuit. Then, the number of receiving channels that is the number of receiving channels on which the conversion processing to the baseband signal is performed is smaller in the second mode than in the first mode, and the speed of the conversion processing is faster in the second mode than in the first mode. Such a configuration can prevent an increase in the number of the ADCs even when the number of receiving channels increases. As a result, an increase in size, manufacturing cost, and power consumption of the radar device can be prevented.

Note that the configuration illustrated in the aforementioned embodiment illustrates just an example, which can be combined with other publicly known techniques and partially omitted and/or modified without departing from the scope of the present disclosure.

### Reference Signs List

1, 1₁ to 1₈ receiving antenna; 2, 2₁, 2₂ transmitting antenna; 3, 3₁ to 3₈ LNA; 4, 4₁ to 4₈ MIX; 5, 5₁ to 5₈ IFA; 6, 6₁, 6₂ PA; 7 VCO; 8 LF; 9 PLL; 10 chirp signal generator; 11, 11₁ to 11₈ BBA; 12, 12₁ to 12₈ BPF; 13, 13₁ to 13₄ ADC; 14, 14₁ to 14₈ FIR; 15, 15₁ to 15₈ FFT; 16 antenna unit; 16a receiving array; 16b transmitting array; 17 high frequency circuit; 17a local unit; 18 baseband circuit; 19 MCU; 20, 20₁ to 20₄ MUX; 20a, 20b input terminal; 20c output terminal; 21 reference signal source; 80 computer; 82 CPU; 83 input/output unit; 84 RAM; 85 ROM; 100 radar device.

## Claims

1. A radar device comprising: an antenna unit to emit a radar wave into space; a high frequency circuit to receive a reflected wave of the radar wave from a target via the antenna unit; and a baseband circuit to convert a received signal outputted from the high frequency circuit into a baseband signal having a digital value, wherein
the radar device has a first mode set to detect the target at a relatively long distance and a second mode set to detect the target at a relatively short distance,
four or more receiving channels are configured in the antenna unit, the high frequency circuit, and the baseband circuit,
a receiving channel number that is the number of the receiving channels on which conversion processing to the baseband signal is performed is smaller in the second mode than in the first mode, and
a speed of the conversion processing is higher in the second mode than in the first mode.

2. The radar device according to claim 1, wherein
the number of the receiving channels configured in the antenna unit, the high frequency circuit, and the baseband circuit is a number obtained by multiplying a natural number by four.

3. The radar device according to claim 1 or 2, wherein
the antenna unit includes receiving antennas for the number of receiving channels on which the reflected wave from the target is received, and
the number of the receiving antennas that contribute to first detection processing in the first mode is larger than the number of the receiving antennas that contribute to second detection processing in the second mode.

4. The radar device according to claim 3, wherein
the receiving antennas for the number of receiving channels form a receiving array,
all the receiving antennas belonging to the receiving array contribute to the first detection processing, and
some of the receiving antennas belonging to the receiving array contributes to the second detection processing.

5. The radar device according to claim 4, wherein
the receiving antennas that contribute to the second detection processing are adjacent to each other in the receiving array.

6. The radar device according to claim 4 or 5, wherein
the baseband circuit includes:
a multiplexer to sequentially switch, multiplex, and output two signals being inputted; and
an analog to digital converter to convert an analog signal outputted from the multiplexer into a digital value, and
the number of each of the multiplexers and the analog to digital converters is half the number of receiving channels.

7. The radar device according to claim 6, wherein
the multiplexer includes first and second input terminals that are two input terminals, and one output terminal,
the output terminal is connected with the analog to digital converter,
the received signal outputted from the high frequency circuit is inputted to the input terminals,
the input terminals of the multiplexers, the number of which is half the number of receiving channels, are in one-to-one correspondence with the receiving antennas in the receiving array in respect of layout, and
an output signal from one of the receiving antennas adjacent to the receiving antenna in one-to-one correspondence with the receiving antennas in respect of layout is inputted to one of the first and second input terminals.

8. The radar device according to claim 7, wherein
at the time of operation in the first mode, the multiplexer alternately switches a signal inputted to the first and second input terminals, and
at the time of operation in the second mode, signal input to the multiplexer is fixed to one of the first and second input terminals.

9. The radar device according to claim 8, wherein
at the time of operation in the first mode, switching of an input signal in the multiplexer is performed with a sampling period that is a reciprocal of a sampling frequency at which the received signal is converted into a digital value.

10. The radar device according to claim 8 or 9, wherein
the baseband circuit includes
a digital filter to perform band limitation on a signal having a digital value obtained by conversion of the analog to digital converter,
at the time of operation in the first mode, the number of taps of the digital filter is individually set to an odd number and to an even number between the receiving channels being multiplexed, and
at the time of operation in the second mode, the number of taps of the digital filter is set to be the same in all the digital filters.

11. The radar device according to claim 8 or 9, comprising
a signal processing unit to perform Fourier transform processing to obtain radar information, wherein
the signal processing unit performs, on a result of the Fourier transform processing, correction processing of canceling a reception phase difference in a back calculation manner, the reception phase difference being caused between the receiving channels being multiplexed.

12. The radar device according to any one of claims 7 to 11, wherein
when the number of receiving channels is four,
first and second multiplexers are included as the multiplexer,
in the receiving array, first to fourth receiving antennas are arranged in this order,
an output signal from the first receiving antenna is inputted to a first input terminal of the first multiplexer,
an output signal from the third receiving antenna is inputted to a second input terminal of the first multiplexer,
an output signal from the second receiving antenna is inputted to a first input terminal of the second multiplexer, and
an output signal from the fourth receiving antenna is inputted to a second input terminal of the second multiplexer.

13. The radar device according to any one of claims 7 to 11, wherein
when the number of receiving channels is eight,
first to fourth multiplexers are provided as the multiplexer,
in the receiving array, first to eighth receiving antennas are arranged in this order,
an output signal from the first receiving antenna is inputted to a first input terminal of the first multiplexer,
an output signal from the third receiving antenna is inputted to a second input terminal of the first multiplexer,
an output signal from the second receiving antenna is inputted to a first input terminal of the second multiplexer,
an output signal from the fourth receiving antenna is inputted to a second input terminal of the second multiplexer,
an output signal from the fifth receiving antenna is inputted to a first input terminal of the third multiplexer,
an output signal from the seventh receiving antenna is inputted to a second input terminal of the third multiplexer,
an output signal from the sixth receiving antenna is inputted to a first input terminal of the fourth multiplexer, and
an output signal from the eighth receiving antenna is inputted to a second input terminal of the fourth multiplexer.
